# EUROPÄISCHE PATENTSCHRIFT

(11) **EP 2 926 027 B1**
(45) Veröffentlichungstag und Bekanntmachung des Hinweises auf die Patenterteilung: **27.06.2018**
(21) Anmeldenummer: 13791772.0
(22) Anmeldetag: 06.11.2013
(51) Int. Cl.: F16G 13/16

(54) **ENERGIEFÜHRUNGSSYSTEM FÜR LANGE VERFAHRWEGE MIT FÜHRUNGSKANAL**
POWER TRANSMISSION SYSTEM FOR LONG TRAVEL DISTANCES HAVING A GUIDE CHANNEL
SYSTÈME DE GUIDAGE D'ÉNERGIE AVEC GOULOTTE DE GUIDAGE POUR TRAJETS DE DÉPLACEMENT LONGS

(30) Priorität: 28.11.2012 DE 102012111542
(43) Veröffentlichungstag der Anmeldung: 07.10.2015
(73) Patentinhaber: Tsubaki Kabelschlepp GmbH, 57482 Wenden-Gerlingen (DE)
(72) Erfinder: KEMPER, Uwe, 57223 Kreuztal (DE)
(74) Vertreter: KNH Patentanwälte Neumann Heine Taruttis PartG mbB
(86) Internationale Anmeldenummer: PCT/EP2013/073148
(87) Internationale Veröffentlichungsnummer: WO 2014/082824

(56) Entgegenhaltungen:
- DE-A1-102006 049 434
- US-A- 3 157 376

## Beschreibung

Der Gegenstand der Erfindung bezieht sich auf ein Energieführungssystem mit wenigstens einer Energieführungseinheit zum Führen von Leitungen, Kabeln, Schläuchen oder dergleichen zwischen einem ortsfesten und einem beweglichen Anschlussbereich.

Zum Führen von Leitungen, Kabeln, Schläuchen oder dergleichen zwischen einem ortsfesten und einem beweglichen Anschlusspunkt sind Energieführungseinheiten bekannt. Mittels einer Energieführungseinheit werden Kabel, Leitungen, Schläuche und dergleichen zu Verbrauchern geführt. Hierbei kann es sich bspw. um Maschinenteile, Kräne etc. handeln. Mittels der Kabel, Leitungen oder Schläuche werde Verbrauchsmittel, Energie oder dergleichen von einem vorzugsweise ortsfesten Anschluss zu einem beweglichen Anschluss des Verbrauchers transportiert. Die Energieführungseinheit kann ein- oder mehrsträngig sein.

Es sind unterschiedliche Ausgestaltungen von Energieführungseinheiten bekannt. Unter der Bezeichnung Energieführungskette wird bspw. eine Energieführungseinheit verstanden, die aus gelenkig miteinander verbundenen einzelnen Gliedern gebildet sind. Die Glieder weisen parallele Laschen und die Laschen verbindende Querstege auf.

Eine andere Ausführungsform einer Energieführungseinheit weist ein Tragband auf, mit dem mittelbar oder unmittelbar Laschen verbunden sind. Die Herstellung einer solchen Energieführungseinheit kann bspw. derart erfolgen, dass zunächst ein Kanal aus einem Kunststoff extrudiert und der Kanal durch Schnitte in Segmente unterteilt wird, wobei das Tragband beibelassen wird.

Bei langen Verfahrwegen besteht das Problem, dass die Reibkräfte zwischen Obertrum und Untertrum sehr groß werden können. Insbesondere kann aufgrund des Eigengewichts der Energieführungseinheit sowie des Gewichts der Leitungen und Kabel oder Schläuche, die in der Energieführungseinheit angeordnet sind, diese hohen mechanischen Beanspruchungen ausgesetzt sein. Die zum Verfahren der Energieführungseinheit notwendige Energie ist relativ groß.

Zur Verbesserung der Funktionalität der Energieführungseinheit und der Verfahrwege ist bekannt, dass zwischen einem Obertrum und einem Untertrum der Energieführungseinheit ein Tragwagen angeordnet wird, so dass der Obertrum auf dem Tragwagen verfahren wird.

Es ist bekannt, dass bspw. durch sogenannte Gleitschuhe, die an wenigstens einigen Segmenten der Energieführungseinheit angeordnet werden, der Reibungswiderstand zwischen den einander reibenden Bereiche der Trume verringert werden kann.

Durch die WO 99/57457 ist eine Energieführungseinheit bekannt, die gelenkig miteinander verbundene Kettenglieder aufweist. An zumindest einigen Kettengliedern sind Rollen vorgesehen. Die Anordnung der Rollen ermöglicht eine Bewegung des Obertrums auf dem Untertrum, wobei die Rollen den Obertrum auf dem Untertrum abstützen.

Problematisch bei einer solchen Ausgestaltung der Energieführungseinheit ist, dass während des Verfahrens des Obertrums die Rollen übereinander verfahren werden müssen. Dies führt zu einer nicht unerheblichen Geräuschentwicklung, welche unerwünscht ist. Während des Verfahrens von Rollen werden auch Stöße in den Obertrum eingebracht, die zu unerwünschten Schwingungen der Energieführungseinheit führen können.

Bei selbstragenden Energieführungseinheiten ist bekannt, dass der Obertrum auf einer Stützkonstruktion verfahren wird. Die US Schrift 3,157,376 beschreibt ein Energieführungssystem gemäß dem Oberbegriff des Anspruchs 1. Dieses weist Schienen auf, die an Stützen befestigt sind. Die Kettenglieder der Energieführungseinheit sind mit Rollen versehen, deren Spurbreite unterschiedlich ist. Einige der Kettenglieder sind mit Rollen versehen, die eine kleine Spurweite aufweisen. Andere Kettenglieder sind mit Rollen versehen, die eine größere Spurweite aufweisen. Die Führungsschienen sind übereinander angeordnet, da die Rollen benachbart zum oberen bzw. unteren Rand des Obertrums angeordnet sind. Die Führungen weisen Durchbrechungen auf, durch die die Rollen durchtreten können.

Problematisch bei einer solchen Anordnung der Energieführungseinheit ist, dass ein nicht unerheblicher Raumbedarf besteht. Ferner muss ein nicht unerheblicher technischer Aufwand betrieben werden, da an den Aussparungen der Führungen Auflaufschrägen vorgesehen sein müssen, wie dies insbesondere aus der Figur 1 der US 3,157,376 entnehmbar ist.

Hiervon ausgehend liegt der vorliegenden Erfindung die Zielsetzung zugrunde, ein Energieführungssystem anzugeben, welches einfacher herstellbar ist und welches einen geringen Raumbedarf hat.

Diese Aufgabe wird erfindungsgemäß durch ein Energieführungssystem mit den Merkmalen des Anspruchs 1 gelöst. Vorteilhafte Weiterbildungen und Ausgestaltungen des Energieführungssystems sind Gegenstand der abhängigen Ansprüche.

Die in den Ansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Energieführungssystem umfasst wenigstens eine Energieführungseinheit zum Führen von Leitungen, Schläuchen oder dergleichen zwischen einem ortsfesten und einem beweglichen Anschlussbereich unter Ausbildung eines Krümmungsbereichs zwischen einem Untertrum und einem Obertrum. Die Energieführungseinheit ist gebildet durch gelenkig miteinander verbundene Segmente. Einige Segmente weisen seitlich angeordnete Rollen mit verschiedenen Spurweiten auf. Die Rollen rollen auf Führungen, wobei die Führungen Aussparungen aufweisen, so dass Rollen an der jeweiligen Umlenkstelle der Energieführungseinheit durch die Führungen durchtreten können. Die Führungen bilden eine seitliche Begrenzung eines Führungskanals des Untertrums.

Durch diese erfindungsgemäße Ausgestaltung des Energieführungssystems wird erreicht, dass auch lange Verfahrwege realisiert werden können, da durch die Rollen die Reibkräfte zwischen Obertrum und Untertrum erheblich verringert werden. Des Weiteren wird durch das Energieführungssystem gemäß der Erfindung der Vorschlag unterbreitet, bei dem das System mit einfachen Mitteln realisiert werden kann. Des Weiteren bedarf es keines großen Raums für das Energieführungssystem, da die Höhe des Energieführungssystems im Wesentlichen durch den Krümmungsradius des Krümmungsbereichs bestimmt wird. Das erfindungsgemäße Energieführungssystem hat auch den Vorzug, dass eine Führung des Untertrums durch den Führungskanal realisiert werden kann.

Der Führungskanal bzw. die Führungen können auch so ausgestaltet sein, dass eine seitliche Führung der Rollen des Obertrums erzielt wird. Ggf. kann die Führung eine Fläche aufweisen, die profiliert ist. Die Rollen weisen ein entsprechendes Gegenprofil auf, so dass auch hierdurch eine Führung des Obertrums erreicht wird.

Nach einer vorteilhaften Ausgestaltung des erfindungsgemäßen Energieführungssystems wird vorgeschlagen, dass zwischen zwei benachbarten Anordnungen von Rollen mit breiter Spurweite eine Anordnung von Rollen mit schmaler Spurweite vorgesehen ist. Insbesondere wird vorgeschlagen, dass der jeweilige Abstand der Anordnung von Rollen mit schmaler Spurweite zu den Anordnungen von Rollen mit breiter Spurweite verschieden ist.

Insbesondere durch diese Anordnung wird erreicht, dass eine Abstützung der Rollen auf der Führung möglich ist, so dass kein Durchhang der Energieführungseinheit vorliegt.

Gemäß einer weiteren vorteilhaften Ausgestaltung des erfindungsgemäßen Energieführungssystems wird vorgeschlagen, dass die Rollen mit ihren Mantelflächen über einen Längsrand der Energieführungseinheit vorstehen.

Hierdurch wird erreicht, dass sich der Obertrum und der Untertrum nicht berühren. Insbesondere wird vorgeschlagen, dass die Höhe des Führungskanals so gewählt ist, dass keine Berührung der Trume erfolgt. Durch den Laufrollendurchmesser und die Position der Rollen an den Segmenten kann sich der Abstand zwischen dem Obertrum und dem Untertrum für die jeweilige Ausführungsform und Anwendung variieren.

Die Energieführungseinheit ist vorzugsweise durch gelenkig miteinander verbundene Kettenglieder gebildet. Es handelt sich vorzugsweise um eine Energieführungseinheit. Besonders bevorzugt ist eine Ausgestaltung des Energieführungssystems, bei dem die Rollen lösbar mit den Segmenten verbunden sind. Dies hat den Vorteil, dass die Rollen ausgetauscht werden können. Es können auch unterschiedliche Rollen verwendet werden. Insbesondere können auch Rollen verwendet werden, die eine Lauffläche aufweisen, welche nur mit einer sehr geringen Geräuschentwicklung verbunden sind.

Weitere Vorteile und Einzelheiten der Erfindung werden anhand der in den Figuren dargestellten Ausführungsbeispiele erläutert, ohne dass der Gegenstand der Erfindung auf dieses Ausführungsbeispiel beschränkt ist. Es zeigen:
- Fig. 1:: schematisch in einer Seitenansicht ein Ausführungsbeispiel eins Energieführungssystems,
- Fig. 2:: schematisch und in einer Draufsicht eine Energieführungseinheit,
- Fig. 3:: das Energieführungssystem im Querschnitt,
- Fig. 4:: das Energieführungssystem in eine Draufsicht,
- Fig. 5-7:: unterschiedliche Positionen des Obertrum beim Verfahren desselbigen
- Fig. 8: ein Energieführungssystem im Querschnitt mit Spurkranzrollen,
- Fig. 9: ein Energieführungssystem im Querschnitt mit seitlicher Führung des Obertrums und
- Fig. 10: eine Führung mit Zentrierung..

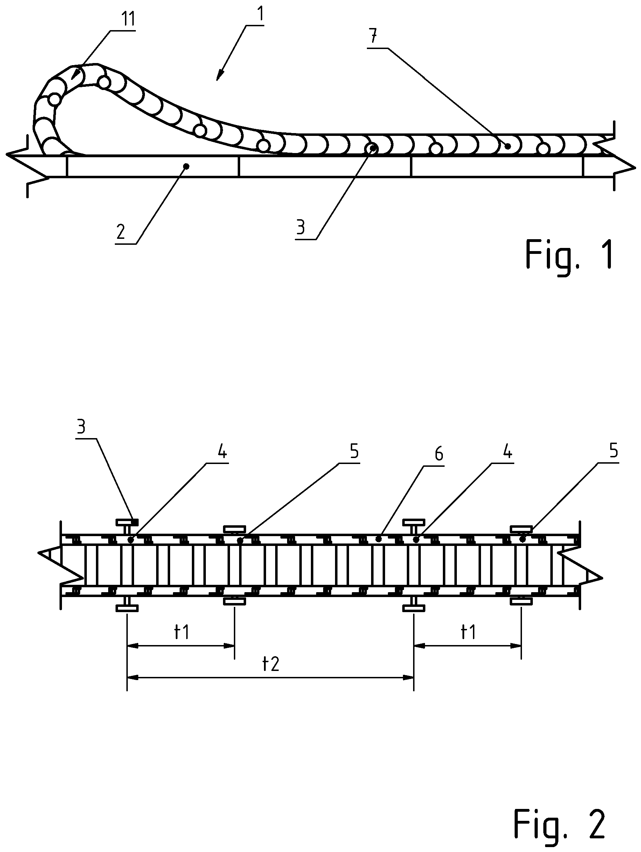

Fig. 1 zeigt schematisch in einer Seitenansicht ein Ausführungsbeispiel eines erfindungsgemäßen Energieführungssystems. Das Energieführungssystem umfasst eine Energieführungseinheit 1 zum Führen von Leitungen, Kabeln, Schläuchen oder dergleichen zwischen einem ortsfesten und einem beweglichen Anschlussbereich unter Ausbildung eines Krümmungsbereichs 11. Es ist ein Untertrum, der in Fig. 1 hinter einer Führung 2 liegt, vorgesehen und ein Obertrum 7. Die Energieführungseinheit ist durch gelenkig miteinander verbundene Segmente 6 gebildet, wie dies insbesondere aus Fig. 2 ersichtlich ist. An einigen Segmenten sind Rollen 3 vorgesehen.

Fig. 2 zeigt einen Abschnitt einer Energieführungseinheit 1. Die Energieführungseinheit 1 ist durch Segmente 6 gebildet. Im konkreten Ausführungsbeispiel handelt es sich um eine Energieführungseinheit, die durch gelenkig miteinander verbundene Kettenglieder gebildet ist. Aus der Darstellung nach Fig. 2 ist ersichtlich, dass beidseits einiger Segmente 6 Rollen 3 vorgesehen sind. Mit dem Bezugszeichen 4 ist ein Segment bezeichnet, welches eine breite Spurweite aufweist. Das Segment 5 weist zwei Rollen, die beidseits des Segments angeordnet sind auf und eine schmale Spurweite hat. Ein Vergleich der Spurweiten der Segmente 4, 5 zeigt, dass die Spurweiten verschieden sind. Die Spurweite am Segment 5 ist kleiner als am Segment 4.

Die Segmente 4, 5 wechseln sich in Längsrichtung der Energieführungseinheit 1 ab. Der Abstand zwischen den Segmenten 4, die eine breite Spurweite aufweisen, ist mit t2 in Fig. 2 bezeichnet. Der Abstand zwischen den Segmenten bzw. den Achsen der Rollen der Segmente 4, 5 ist mit t1 bezeichnet. Diese Anordnung wiederholt sich, wobei der Abstand t2 größer ist als zwei Mal t1.

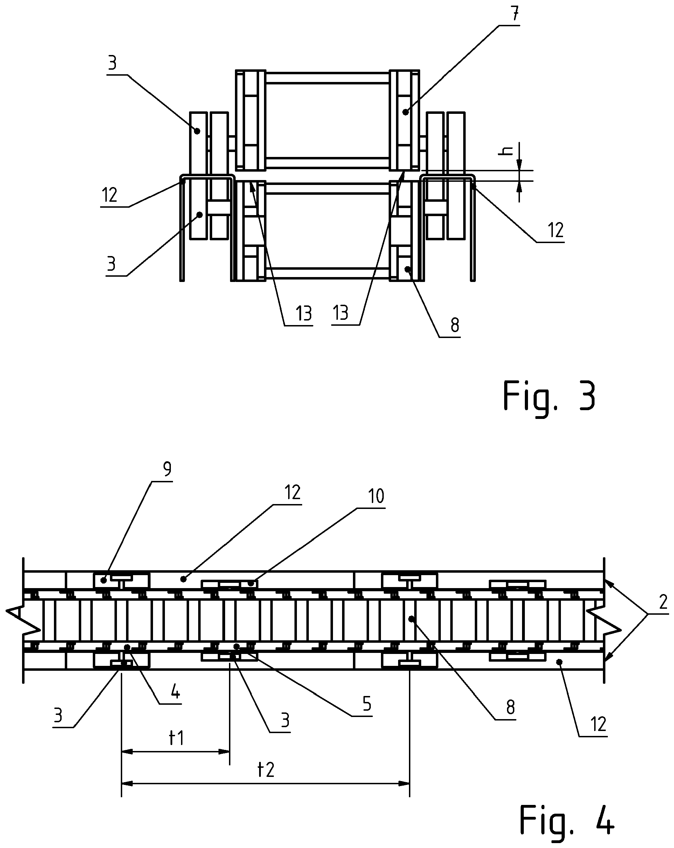

In Fig. 3 ist das Energieführungssystem im Querschnitt dargestellt. Beidseits des Untertrums 8 sind Führungen 12 angeordnet. Die Führungen 12 weisen einen im Wesentlichen U-förmigen Querschnitt auf. Die Breite der Führungen 12 ist so bemessen, dass die Rollen 3 innerhalb des U-förmigen Querschnitts der Führungen 12 abgelegt werden können. Mit "h" ist der Abstand zwischen dem Untertrum 8 und dem Obertrum 7 bezeichnet. Der Abstand h kann durch die Höhe der Führung 12 und/oder den Durchmesser der Rollen 3 variiert werden. Aus Fig. 3 ist ersichtlich, dass die Rollen 3 so angeordnet sind, dass diese über einen Längsrand 13 der Energieführungseinheit 1 vorstehen. Hierbei handelt es sich um den sich selbst zugewandten Längsrand 13 der Energieführungseinheit 1.

Aus der Draufsicht des Energieführungssystems in Fig. 4 ist ersichtlich, dass die Führungen 12, die den Führungskanal 2 bilden, Aussparungen 9, 10 aufweisen. Die Aussparungen 9, 10 sind so ausgebildet, dass die Rollen 3 beim Ablegen des Untertrums 8 in die Führungen 12 abgelegt werden können. Die Aussparungen 9, 10 sind an die Spurweite angepasst. Die Rollen 3 des Obertrums 7, der in Fig. 4 nicht dargestellt ist, können auf den Führungen 12 laufen.

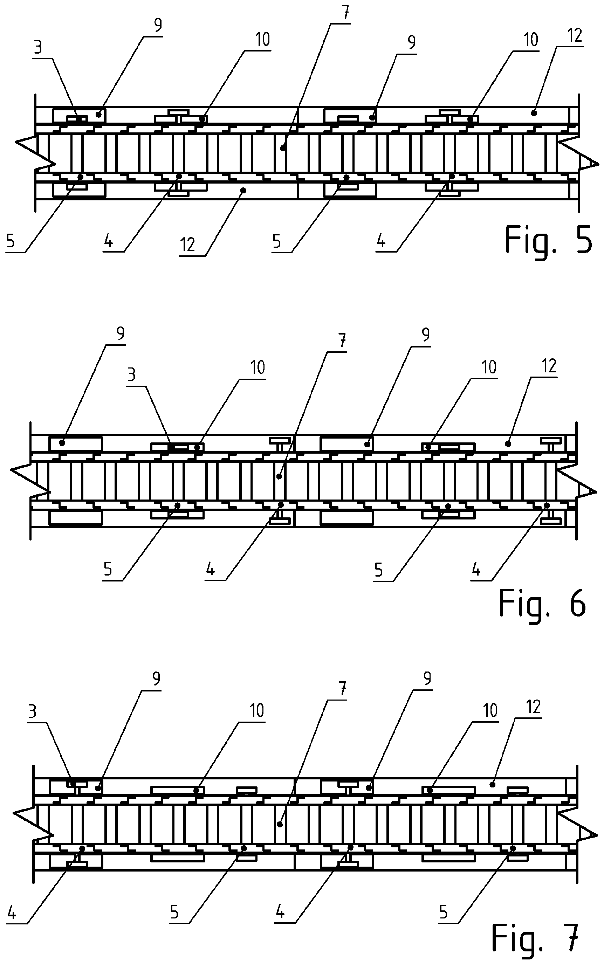

In den Fig. 5-7 ist der Bewegungsablauf des Obertrums 7 schematisch dargestellt. Wird das bewegliche Ende der Energieführungseinheit verfahren, so bewegt sich der Obertrum 7. Die Rollen 3 rollen auf den Führungen 12 ab. Erreicht die Umlenkstelle der Energieführungseinheit 1 bestimmte Punkte, so treten die Rollen durch die Führungen 12 hindurch und die entsprechenden Segmente werden als Segmente des Untertrums abgelegt. Aus den Darstellungen in den Fig. 5 und 6 ist es ersichtlich, dass die Segmente 4 mit breiter Spur die Aussparungen 10 in den Führungen 12 passieren können, da die Erstreckung der Aussparungen 10 quer zur Längsrichtung der Energieführungseinheit kleiner ist als die Spurbreite der Segmente mit schmaler Spur.

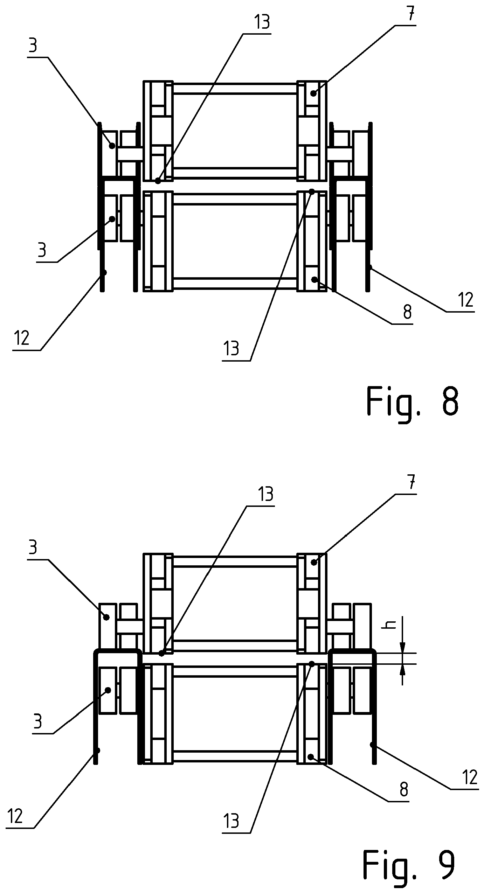

In Fig. 8 ist ein modifiziertes Ausführungsbeispiel des Energieführungssystems im Querschnitt dargestellt. Beidseits des Untertrums 8 sind Führungen 12 angeordnet. Die Führungen 12 weisen einen im Wesentlichen U-förmigen Querschnitt auf. Die Breite der Führungen 12 ist so bemessen, dass die Rollen 3 innerhalb des U-förmigen Querschnitts der Führungen 12 abgelegt werden können. In den Führungen 12 sind fensterartige Aussparrungen vorgesehen durch und in die die Rollen 3 abgelegt werden. Die Rollen 3 sind in den dargestellten Ausführungsbeispiel als Spurkranzrollen ausgebildet, wobei der Kranz seitlich an der jeweiligen Führung 12 anliegt, so dass die Rollen 3 geführt werden.

Eine weitere Modifikation des Energieführungssystems ist in der Fig. 9 dargestellt. Beidseits des Untertrums 8 sind Führungen 12 angeordnet. Die Führungen 12 weisen einen im Wesentlichen U-förmigen Querschnitt auf, was nicht zwingend ist. Die Führungen können auch vorzugsweise T-förmig ausgebildet sein, wobei das T-förmige Profil um 90° gedreht ist. In den Führungen 12 sind fensterartige Aussparrungen vorgesehen durch und in die die Rollen 3 abgelegt werden. Der Abstand h kann durch die Höhe der Führungen 12 eingestellt werden. Vorzugsweise sind die Rollen 3 so angeordnet, dass deren Mantelfläche mit Abstand zu einem Längsrand 13 endet und die Führungen 12 eine solche Höhe aufweisen, dass eine seitliche Führung des Obertrums 7 ermöglicht wird.

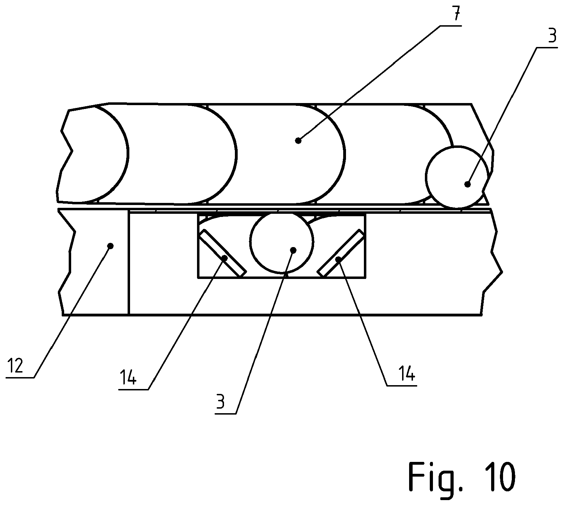

In Fig. 10 ist eine Führung 12 dargestellt. Sie weist fensterartige Aussparrungen aus. Aus der Darstellung nach Fig 10 ist ersichtlich, dass innerhalb der Führung 12 und der Aussparung im Wesentlichen V-förmig angeordnete Stege 14 vorgesehen sind. Die Stege 14 bilden eine Fangeinheit, mit welcher gewährleistet werden soll, dass sich die Energieführungseinheit beim Ablegen des Krümmungsbereichs immer wieder neu zentriert. Ein über die Lebensdauer ansteigende Längenänderung der Energieführungseinheit beispielsweise durch Spiel oder Dehnungen der Energieführungseinheit, insbesondere ein Bolzen-Bohrungsspiel, wie dies bei Energieführungskette vorkommen kann, kann somit aufgefangen und die Betriebssicherheit erhöht werden.

### Bezugszeichenliste

1 Energieführungseinheit
2 Führungskanal
3 Rollen
4 Segment mit breiter Spur
5 Segment mit schmaler Spur
6 Segment
7 Obertrum
8 Untertrum
9 Aussparung für Segmente mit breiter Spur
10 Aussparung für Segmente mit schmaler Spur
11 Krümmungsbereich
12 Führung
13 Längsrand
14 Stege

## Patentansprüche

1. Energieführungssystem umfassend wenigstens eine Energieführungseinheit (1) zum Führen von Leitungen, Kabeln, Schläuchen oder dergleichen zwischen einem ortsfesten und einem beweglichen Anschlussbereich unter Ausbildung eines Krümmungsbereichs (11) zwischen einem Untertrum (8) und einem Obertrum (7), die gelenkig miteinander verbundene Segmente (6) aufweist, wobei einige Segmente (4, 5) seitlich angeordnete Rollen (3) mit verschiedenen Spurweiten aufweisen und die Rollen (3) auf Führungen (12) rollen, wobei die Führungen (12) Aussparrungen (9, 10) aufweisen, so dass Rollen (3) an der jeweiligen Umlenkstelle der Energieführungseinheit (1) durch die Führungen hindurchtreten können, **dadurch gekennzeichnet, dass** die Führungen (12) seitliche Begrenzungen eines Führungskanals (2) des Untertrums (8) bilden.

2. Energieführungssystem nach Anspruch 1, **dadurch gekennzeichnet, dass** zwischen zwei benachbarten Anordnungen von Rollen mit breiter Spurweite eine Anordnung von Rollen mit schmaler Spurweite vorgesehen ist.

3. Energieführungssystem nach Anspruch 2, **dadurch gekennzeichnet, dass** der jeweilige Abstand der Anordnung von Rollen mit schmaler Spurweite zu den beiden Anordnungen von Rollen mit breiter Spurweite verschieden ist.

4. Energieführungssystem nach Anspruch 1, 2 oder 3, **dadurch gekennzeichnet, dass** die Rollen (3) mit ihren Mantelflächen über einen Längsrand (13) der Energieführungseinheit (1) vorstehen.

5. Energieführungssystem nach Anspruch 1, 2 oder 3, **dadurch gekennzeichnet, dass** die Führungen (12) teilweise den Obertrum (7) überlappen.

6. Energieführungssystem nach wenigstens einem der Ansprüche 1 bis 5, **dadurch gekennzeichnet, dass** die Rollen (3) Spurkranzrollen sind.

7. Energieführungssystem nach einem der Ansprüche 1 bis 6, **dadurch gekennzeichnet, dass** die Energieführungseinheit (1) durch gelenkig miteinander verbundene Kettenglieder gebildet ist.

8. Energieführungssystem nach einem der Ansprüche 1 bis 7, **dadurch gekennzeichnet, dass** die Rollen (3) lösbar mit den Segmenten (4, 5) verbunden sind.

9. Energieführungssystem nach wenigstens einem der Ansprüche 1 bis 8, **dadurch gekennzeichnet, dass** die Führung (12) durch wenigstens ein U-förmiges Profil gebildet ist.

## Claims

1. A power conducting system comprising at least one power conducting unit (1) for guiding lines, cables, hoses or the like between a stationary connection area and a moving connection area, with a curved region (11) being formed between a lower run (8) and an upper run (7), said power conducting unit (1) having segments (6) that are connected together in an articulated manner, wherein some segments (4, 5) have laterally arranged rollers (3) with different track widths and the rollers (3) roll on guides (12), wherein the guides (12) have cutouts (9, 10) so that rollers (3) can pass through the guides at each particular deflection point of the power conducting unit (1), **characterized in that** the guides (12) form lateral boundaries of a guide channel (2) for the lower run (8).

2. The power conducting system as claimed in claim 1, **characterized in that** an arrangement of rollers having a narrow track width is provided between two adjacent arrangements of rollers having a wide track width.

3. The power conducting system as claimed in claim 2, **characterized in that** each particular spacing of the arrangement of rollers having a narrow track width from the two arrangements of rollers having a wide track width is different.

4. The power conducting system as claimed in claim 1, 2 or 3, **characterized in that** the rollers (3) protrude beyond a longitudinal edge (13) of the power conducting unit (1) with their lateral surfaces.

5. The power conducting system as claimed in claim 1, 2 or 3, **characterized in that** the guides (12) partially overlap the upper run (7).

6. The power conducting system as claimed in at least one of claims 1 to 5, **characterized in that** the rollers (3) are flanged rollers.

7. The power conducting system as claimed in one of claims 1 to 6, **characterized in that** the power conducting unit (1) is formed by chain links that are connected together in an articulated manner.

8. The power conducting system as claimed in one of claims 1 to 7, **characterized in that** the rollers (3) are connected detachably to the segments (4, 5).

9. The power conducting system as claimed in at least one of claims 1 to 8, **characterized in that** the guide (12) is formed by at least one U-shaped profile.

## Revendications

1. Système de chaîne d'énergie, comprenant au moins une unité formant chaîne d'énergie (1) destinée à guider des lignes, câbles, flexibles ou similaires entre une zone de raccordement fixe et une zone de raccordement mobile en formant une zone de courbure (11) entre un brin inférieur (8) et un brin supérieur (7), laquelle possède des segments (6) reliés entre eux de manière articulée, certains segments (4, 5) possédant des galets (3) disposés latéralement et ayant des écartements de voie différents et les galets (3) roulant sur des guides (12), les guides (12) possédant des cavités (9, 10) de sorte que les galets (3) puissent passer à travers les guides au niveau du point de renvoi correspondant de l'unité formant chaîne d'énergie (1), **caractérisé en ce que** les guides (12) forment des délimitations latérales d'un canal de guidage (2) du brin inférieur (8).

2. Système de chaîne d'énergie selon la revendication 1, **caractérisé en ce qu'**un arrangement de galets à écartement de voie étroit se trouve entre deux arrangements voisins de galets à écartement de voie large.

3. Système de chaîne d'énergie selon la revendication 2, **caractérisé en ce que** l'espacement respectif entre l'arrangement de galets à écartement de voie étroit et les deux arrangements de galets à écartement de voie large est différent.

4. Système de chaîne d'énergie selon la revendication 1, 2 ou 3, **caractérisé en ce que** les galets (3) font saillie avec leurs enveloppes d'un bord longitudinal (13) de l'unité formant chaîne d'énergie (1) .

5. Système de chaîne d'énergie selon la revendication 1, 2 ou 3, **caractérisé en ce que** les guides (12) chevauchent partiellement le brin supérieur (7).

6. Système de chaîne d'énergie selon au moins l'une des revendications 1 à 5, **caractérisé en ce que** les galets (3) sont des galets à boudin.

7. Système de chaîne d'énergie selon l'une des revendications 1 à 6, **caractérisé en ce que** l'unité formant chaîne d'énergie (1) est formée par des maillons de chaîne reliés de manière articulée entre eux.

8. Système de chaîne d'énergie selon l'une des revendications 1 à 7, **caractérisé en ce que** les galets (3) sont reliés aux segments (4, 5) de manière amovible.

9. Système de chaîne d'énergie selon au moins l'une des revendications 1 à 8, **caractérisé en ce que** les guides (12) sont formés par au moins un profil en U.
